# FASCICULE DE BREVET EUROPEEN

(11) **EP 3 572 886 B1**
(45) Date de publication et mention de la délivrance du brevet: **14.07.2021**
(21) Numéro de dépôt: 18173871.7
(22) Date de dépôt: 23.05.2018
(51) Int. Cl.: G04B 19/30, G04B 19/28, G04C 10/00, G04C 17/02

(54) **MONTRE COMPRENANT UN ÉLÉMENT MUNI D'UN INDEX ÉCLAIRABLE**
ARMBANDUHR, DIE EIN ELEMENT MIT EINEM BELEUCHTBAREN ZEIGER UMFASST
WATCH COMPRISING AN ELEMENT HAVING A LIGHTING INDEX

(43) Date de publication de la demande: 27.11.2019
(73) Titulaire: The Swatch Group Research and Development Ltd, 2074 Marin (CH)
(72) Inventeur: TORTORA, Pierpasquale, 2000 Neuchâtel (CH); STALDER, Michael, 2564 Bellmund (CH); REINAUER, Olga, 2000 Neuchâtel (CH)
(74) Mandataire: ICB SA

(56) Documents cités:
- CH-A- 377 739
- FR-A- 606 277
- JP-A- S5 360 266

## Description

### DOMAINE TECHNIQUE DE L'INVENTION

L'invention concerne une montre comprenant une boîte de montre munie d'une carrure, la carrure portant un élément muni d'au moins un index éclairable.

La montre est configurée pour pouvoir être immergée dans l'eau de mer, telle que par exemple une montre de plongée.

### ETAT DE LA TECHNIQUE

Dans le domaine des montres comprenant une boîte de montre munie d'une carrure, il est connu de prévoir sur la carrure un élément muni d'au moins un index lumineux. Dans le cas d'une montre de plongée l'élément est par exemple une lunette tournante, et l'index permet par exemple d'indiquer une position de référence pour la mesure, par le plongeur, de son temps d'immersion en mer. Pour ce faire, le plongeur tourne la lunette de manière à aligner l'index avec l'aiguille des minutes. Cette position devient alors la référence pour mesurer le temps écoulé. Un des critères d'efficacité principaux d'une montre de plongée doit être la lisibilité de l'heure et de l'index pendant la phase d'immersion.

Afin de répondre à cette contrainte, une solution connue consiste à recouvrir l'index de la lunette, ainsi que les aiguilles de la montre, d'une matière phosphorescente. Ceci permet de rendre l'index et les aiguilles visibles dans des conditions de faible luminosité, typiquement à quelques mètres sous l'eau. Une telle montre de plongée est par exemple décrite dans la demande de brevet FR 1 572 837 A. Toutefois, un inconvénient de cette solution est qu'elle impose de charger préalablement les éléments phosphorescents à la lumière du soleil ou auprès d'une source de lumière artificielle, afin que ces derniers puissent ensuite émettre, durant une durée limitée à quelques heures et de façon décroissante (type de phosphore, quantité, durée et intensité de la charge avant plongée), de la lumière dans un environnement obscur par exemple sous l'eau.

Il est également connu des montres-bracelet comprenant un cadran muni de plusieurs index lumineux, permettant la lecture d'une information située sur le cadran dans l'obscurité aussi bien qu'en plein jour.

Une telle montre-bracelet est par exemple décrite dans la demande de brevet WO 2016146350 A1. La montre-bracelet comprend une boîte de montre, une lunette tournante montée sur la boîte de montre et un cadran muni de plusieurs index lumineux. Les index lumineux sont éclairés à travers le cadran par une source de lumière disposée sous le cadran et alimentée par une source d'énergie électrique telle qu'une pile ou un accumulateur rechargeable. Un composant d'activation de la source de lumière est logé dans la lunette tournante et coopère avec un composant de détection logé dans la boîte de montre. Ainsi, l'utilisateur peut commander l'allumage de la source de lumière en faisant pivoter la lunette tournante et en l'amenant dans une position prédéterminée dans laquelle la présence du composant d'activation est détectée par le composant de détection qui, en réponse, commande l'allumage de la source de lumière ; la lunette agit là comme un interrupteur. Toutefois, lorsque la source d'énergie électrique arrive à épuisement, il est nécessaire de remplacer cette dernière ou de procéder manuellement à sa recharge, ce qui est contraignant pour l'utilisateur.

On connaît encore des montres bracelet qui utilisent l'eau de mer pour former une pile électrochimique. Une telle montre est par exemple décrite dans le brevet CH 377739.

### RÉSUMÉ DE L'INVENTION

L'invention a donc pour but de fournir une montre permettant d'éclairer l'index dans des conditions de faible luminosité notamment sous l'eau, tout en étant simple d'utilisation, et ne nécessitant ni de charge préalable d'éléments phosphorescents ni de remplacement ou de recharge manuels d'une source d'énergie électrique.

A cet effet, l'invention concerne une montre qui comprend les caractéristiques mentionnées dans la revendication indépendante 1.

Des formes particulières de la montre sont définies dans les revendications dépendantes 2 à 22.

Un avantage d'une telle montre selon l'invention réside dans l'utilisation d'une paire d'électrodes fixées dans une cavité intérieure de l'élément et d'un dispositif de source de lumière relié à la paire d'électrodes et agencé en regard de l'index. L'élément est perméable à l'eau de sorte que, lorsque la montre est immergée dans l'eau de mer, de l'eau de mer peut pénétrer dans la cavité intérieure. La paire d'électrodes et l'eau de mer forment ainsi une pile électrochimique. De cette façon, lorsque la montre est immergée, de l'eau de mer pénètre dans le volume entre les électrodes, permettant à la pile ainsi formée de se mettre en fonction et d'alimenter le dispositif de source de lumière. Ceci offre une solution particulièrement simple permettant d'éclairer l'index dans des conditions de faible luminosité sous l'eau, sans nécessiter d'opération de remplacement ou de recharge manuels d'une source d'énergie électrique. De plus, l'index s'éclaire et reste éclairé dès que la montre est immergée, sans que l'utilisateur n'ait à presser de boutons ou de commandes particulières.

L'élément est une lunette annulaire montée à rotation autour de la carrure, la lunette définissant une cavité intérieure débouchant à l'extérieur de la boîte de montre. La paire d'électrodes et le dispositif de source de lumière sont de préférence solidaires de la lunette annulaire, de manière à pouvoir tourner autour de la carrure en même temps que la lunette.

Avantageusement, la montre comporte en outre un élément mécanique de séparation des deux électrodes de la paire d'électrodes. Ceci permet d'empêcher tout contact physique entre les électrodes.

Avantageusement, la montre comprend plusieurs paires d'électrodes de polarités opposées, les paires d'électrodes étant reliées entre elles en série. Ceci permet, par exemple lorsque le dispositif de source de lumière comporte au moins une diode électroluminescente, d'atteindre plus facilement la tension de seuil de cette dernière pour pouvoir l'allumer.

Selon une caractéristique technique particulière de l'invention, le dispositif de source de lumière comporte au moins une diode électroluminescente.

Avantageusement, la diode électroluminescente est enrobée dans une résine de protection apte à isoler électriquement la diode électroluminescente de l'eau. Ceci permet de protéger et d'isoler électriquement la diode électroluminescente vis-à-vis de l'eau.

Avantageusement encore, la diode électroluminescente est agencée dans la cavité intérieure de l'élément, sous l'index. Cette configuration particulière permet d'éclairer efficacement l'index lorsque la montre est immergée dans l'eau de mer.

Selon une caractéristique technique particulière de l'invention, l'index est formé d'une ouverture ménagée dans l'élément, ladite ouverture étant munie d'une fenêtre apte à laisser passer la lumière. De préférence, la fenêtre est réalisée en saphir.

Avantageusement, au moins une des surfaces libres du saphir est dépolie. Ceci permet de mieux diffuser la lumière émise par le dispositif de source de lumière et d'augmenter l'angle de vue de l'index illuminé.

Selon un exemple de réalisation particulier de l'invention, les électrodes de la paire d'électrodes sont choisies de manière que la paire d'électrodes et l'eau de mer forment une pile électrochimique de type Leclanché. Cet exemple de réalisation particulier présente l'avantage d'obtenir une puissance électrique améliorée pour la pile électrochimique.

Selon un autre exemple de réalisation particulier de l'invention, les électrodes de la paire d'électrodes sont choisies de manière que la paire d'électrodes et l'eau de mer forment une pile électrochimique de type métal/air. Cet exemple de réalisation particulier présente l'avantage d'obtenir une densité d'énergie élevée pour la pile électrochimique.

Avantageusement, une anode de la paire d'électrodes est constituée d'un matériau métallique choisi parmi le groupe consistant en de l'aluminium, du zinc et du magnésium. De tels matériaux présentent l'avantage d'être très énergétiques. Ainsi, si la pile s'assèche rapidement et devient ainsi inactive entre deux immersions successives, la corrosion de l'anode n'aura pas le temps d'affecter significativement le rendement galvanique de la pile.

Avantageusement, une paroi intérieure de la cavité intérieure est revêtue d'une couche d'un sel soluble dans l'eau. Ceci offre l'avantage de pouvoir également utiliser la montre dans un environnement d'eau douce. En effet le sel, combiné à l'eau douce dans laquelle il est dissout, forme alors une pile électrochimique avec la paire d'électrodes.

Avantageusement, la montre comprend en outre un actionneur externe et un dispositif de source de lumière additionnel agencé dans la boîte de montre en regard d'un cadran de la montre, l'actionneur externe et le dispositif de source de lumière additionnel étant reliés à la paire d'électrodes. Ceci permet, en prenant le contact sur les électrodes via l'actionnement de l'actionneur externe, d'alimenter également le dispositif de source de lumière additionnel, et d'ainsi éclairer, outre l'index, le cadran et les aiguilles de la montre.

### BRÈVE DESCRIPTION DES FIGURES

Les buts, avantages et caractéristiques de la montre selon l'invention apparaîtront mieux dans la description suivante sur la base d'au moins une forme d'exécution non limitative illustrée par les dessins sur lesquels :
- la figure 1 est une vue de dessus d'une montre selon un mode de réalisation préférentiel de l'invention, la montre comprenant une lunette annulaire munie d'un index ;
- la figure 2 est une vue schématique de l'intérieur de la montre de la figure 1, la montre comprenant une diode électroluminescente et deux cellules en série comportant chacune une paire d'électrodes ;
- la figure 3 est une représentation schématique de la montre de la figure 2 ;
- la figure 4 est une vue en coupe, prise selon un plan de coupe IV-IV, de la montre de la figure 2 selon une première variante de réalisation, dans un état éteint de la diode électroluminescente ;
- la figure 5 est une vue analogue à celle de la figure 4, dans un état allumé de la diode électroluminescente ; et
- la figure 6 est une vue en coupe, prise selon un plan de coupe VI-VI, de la montre de la figure 2 selon une deuxième variante de réalisation.

### DESCRIPTION DETAILLEE DE L'INVENTION

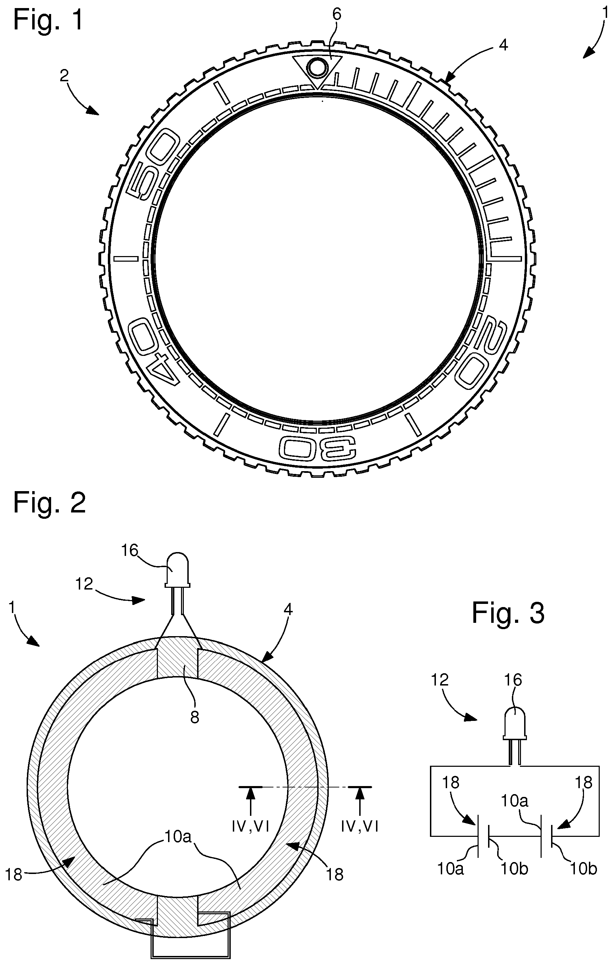

La figure 1 représente une montre 1 munie d'une boîte de montre 2. La boîte de montre 2 comprend une carrure, une telle carrure n'étant pas représentée sur les figures pour des raisons de clarté. La carrure porte un élément 4. L'élément 4 est muni d'au moins un index 6 et définit une cavité intérieure 8, une telle cavité intérieure 8 étant visible aux figures 2 et 4 à 6.

Dans le mode de réalisation illustré sur les figures 1 à 6, l'élément 4 est une lunette tournante annulaire montée à rotation autour de la carrure. Dans l'exemple illustratif de la figure 1, la montre 1 est une montre de plongée et la lunette tournante 4 comporte un seul index 6. L'index 6 est un index éclairable et permet de constituer une position référence par exemple pour la mesure, par le plongeur, de son temps d'immersion dans l'eau.

L'index 6 est par exemple formé d'une ouverture ménagée dans l'élément 4. L'ouverture est de préférence fermée par un élément de fermeture ou fenêtre apte à laisser passer la lumière. De préférence, la fenêtre est réalisée en saphir. De préférence encore, au moins une des surfaces libres de la fenêtre, en l'occurrence du saphir est dépolie.

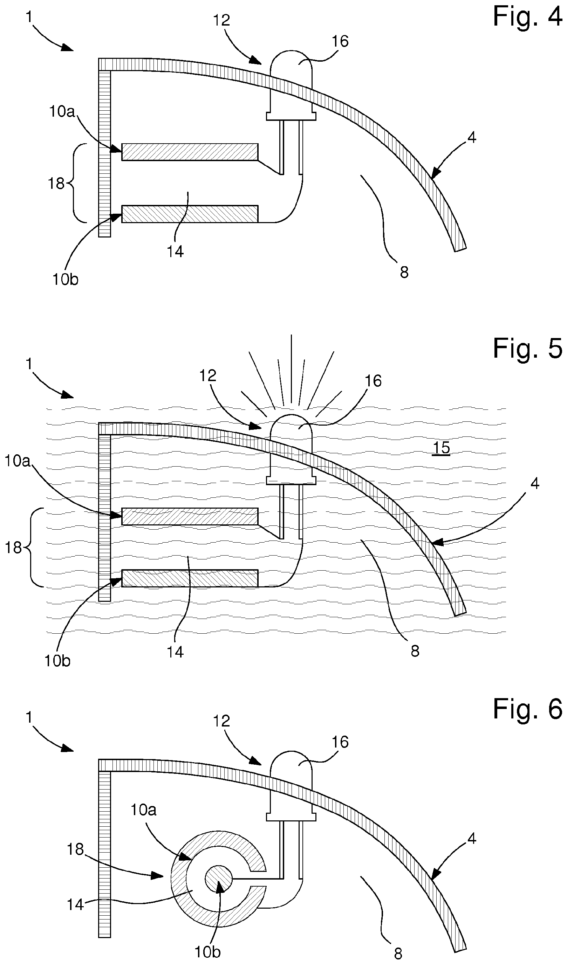

Comme représenté sur les figures 2 et 3, la montre 1 comprend en outre au moins une paire d'électrodes 10a, 10b et au moins un dispositif de source de lumière 12 relié à la paire d'électrodes 10a, 10b. Dans l'exemple illustratif des figures 2 et 3, la montre 1 comprend deux paires d'électrodes 10a, 10b et un seul dispositif de source de lumière 12. De préférence, la montre 1 comprend en outre un élément mécanique 14 de séparation des deux électrodes 10a, 10b de chaque paire d'électrodes. Un tel élément mécanique 14 est visible sur les figures 4 à 6.

De préférence encore, la montre 1 peut également comprendre selon une variante un actionneur externe et un dispositif de source de lumière additionnel ; de tels éléments n'étant pas visibles sur les figures pour des raisons de clarté. L'actionneur externe est par exemple formé d'un bouton poussoir. Le dispositif de source de lumière additionnel est par exemple agencé dans la boîte de montre 2 en regard d'un cadran de la montre. L'actionneur externe et le dispositif de source de lumière additionnel sont reliés à la paire d'électrodes 10a, 10b.

L'élément 4 est agencé sur la boite de montre de manière que l'eau puisse s'introduire dans la cavité intérieure 8 et est donc perméable à l'eau. Pour ce faire, la cavité intérieure 8 débouche à l'extérieur par au moins un orifice par exemple, comme illustré sur les figures 4 à 6 l'élément 4 est agencé sur carrure de la boîte de montre 2 de manière à définir une ouverture vers l'extérieur, laquelle ouverture est en communication fluidique avec la cavité intérieure 8. Dans l'exemple illustratif de la figure 1 où l'élément 4 est une lunette tournante annulaire, la lunette tournante 4 est par exemple clippée sur la carrure en recouvrant cette dernière, et en définissant, par exemple avec la carrure, une ouverture sensiblement circulaire, en communication fluidique avec la cavité intérieure 8. L'ouverture est dans ce cas située entre le pourtour extérieur interne de la lunette 4 et le rebord externe de la carrure.

Selon une variante, la cavité intérieure 8 est reliée à l'extérieur de la lunette par un orifice 8a ménagé dans une paroi de la lunette et par lequel un liquide peut aisément s'introduire. De préférence la cavité intérieure 8 est reliée à l'extérieur par au moins deux orifices qui permettent une circulation de liquide dans ladite cavité.

Les électrodes 10a, 10b sont fixées dans la cavité intérieure 8. De cette manière, et puisque l'élément 4 est perméable à l'eau, de l'eau de mer peut pénétrer dans la cavité intérieure 8 lorsque la montre 1 est immergée dans l'eau de mer, et venir ainsi au contact des électrodes 10a, 10b. La ou les paire(s) d'électrodes 10a, 10b et l'eau de mer forment alors une pile électrochimique destinée à alimenter électriquement le dispositif de source de lumière 12, comme cela sera décrit plus en détail par la suite. Riche en sel et ions, l'eau de mer agit en effet comme un électrolyte qui active une réaction d'oxydo-réduction aux électrodes. Les électrodes 10a, 10b sont tenues mécaniquement dans la cavité intérieure 8 de manière à ne jamais entrer en contact entre elles ni avec la surface de la lunette tournante 4.

Dans l'exemple illustratif des figures 2 et 3 selon lequel la montre 1 comprend deux paires d'électrodes 10a, 10b, chaque paire d'électrodes comprend une électrode 10a de polarité positive, aussi appelée cathode ; et une électrode 10b de polarité négative, aussi appelée anode. Chaque paire d'électrodes 10a, 10b forme une cellule génératrice de courant 18, les deux cellules 18 étant reliées entre elles en série, comme illustré sur la figure 2 ainsi que sur le circuit-équivalent de la figure 3. Plus précisément, l'anode 10b d'une première paire d'électrodes est connectée à la cathode 10a d'une deuxième paire d'électrodes. La cathode 10a de la première paire d'électrodes et l'anode 10b de la deuxième paire d'électrodes sont reliées à des bornes respectives du dispositif de source de lumière 12. Comme visible sur la figure 2, les électrodes 10a, 10b sont découpées dans la forme de la lunette tournante 4. En variante non représentée, le nombre de paires d'électrodes 10a, 10b reliées entre elles en série peut être choisi supérieur ou égal à trois.

Selon une première variante de réalisation illustrée sur les figures 4 et 5, les deux électrodes 10a, 10b de chaque paire d'électrodes présentent chacune une géométrie plane et s'étendent parallèlement l'une à l'autre, en vis-à-vis dans la cavité intérieure 8. Selon cette première variante de réalisation, l'élément mécanique 14 de séparation des deux électrodes 10a, 10b est par exemple formé d'une membrane en tissu. La membrane en tissu est par exemple agencée entre les deux électrodes 10a, 10b de chaque paire d'électrodes. Lorsque la montre 1 est immergée dans l'eau de mer 15, le volume entre les électrodes 10a, 10b se remplit d'eau de mer 15. La pile électrochimique formée des électrodes 10a, 10b et de l'eau de mer 15 se met alors en fonction via une réaction d'oxydo-réduction se produisant entre les électrodes 10a, 10b et l'eau de mer 15. Le dispositif de source de lumière 12 passe alors d'un état éteint, représenté sur la figure 4, à un état allumé, représenté sur la figure 5.

Selon une deuxième variante de réalisation illustrée sur la figure 6, les deux électrodes 10a, 10b de chaque paire d'électrodes présentent chacune une géométrie cylindrique. Les deux électrodes 10a, 10b de chaque paire d'électrodes sont agencées de manière concentrique dans la cavité intérieure 8. Par exemple la cathode 10a de chaque paire d'électrodes, formée d'une feuille métallique, entoure l'anode 10b de cette même paire d'électrodes. En variante non représentée, l'anode 10b de chaque paire d'électrodes peut entourer la cathode 10a de cette même paire d'électrodes. Selon cette deuxième variante de réalisation, l'élément mécanique 14 de séparation des deux électrodes 10a, 10b est par exemple formé d'une membrane perméable aux ions. La membrane perméable aux ions est par exemple agencée entre les deux électrodes 10a, 10b de chaque paire d'électrodes, et assure ainsi l'espacement entre les deux électrodes 10a, 10b. Le fonctionnement de la montre 1 selon cette deuxième variante de réalisation est analogue à celui de la montre 1 selon la première variante de réalisation, l'eau de mer remplissant le volume entre les deux électrodes concentriques 10a, 10b.

De préférence, une paroi intérieure de la cavité intérieure 8 est revêtue d'une couche d'un sel soluble dans l'eau, une telle couche de sel n'étant pas représentée sur les figures pour des raisons de clarté. Ceci permet d'utiliser également la montre selon l'invention dans un environnement d'eau douce.

Le dispositif de source de lumière 12 est agencé en regard de l'index 6, permettant ainsi l'éclairage de l'index 6. De préférence, comme représenté sur les figures 2, et 4 à 6, le dispositif de source de lumière 12 est solidaire de la lunette tournante 4. De préférence encore, le dispositif de source de lumière 12 comprend au moins une diode électroluminescente 16. Dans l'exemple illustratif des figures 2 à 6, le dispositif de source de lumière 12 comprend une seule diode électroluminescente 16. Le dispositif de source de lumière 12 peut en outre comporter une résistance connectée en série de la diode électroluminescente 16. Une telle résistance, non représentée sur les figures, est destinée à limiter le courant circulant au sein de la diode électroluminescente 16 et à ainsi protéger cette dernière. Ceci permet de garantir un courant constant dans le circuit de la diode électroluminescente 16.

La diode électroluminescente 16 est de préférence enrobée dans une résine de protection apte à isoler électriquement la diode électroluminescente 16 de l'eau. Une telle résine de protection n'est pas représentée sur les figures pour des raisons de clarté. La diode électroluminescente 16 est par exemple agencée dans la cavité intérieure 8 de l'élément 4, sous l'index 6 de manière à pouvoir éclairer ce dernier. La tension de seuil de la diode électroluminescente est par exemple comprise entre 2,6 V et 3 V.

Plusieurs exemples de réalisation particuliers vont maintenant être décrits pour les électrodes 10a, 10b.

Selon un premier exemple de réalisation particulier, une des électrodes de la paire d'électrodes 10a, 10b est une électrode en zinc, et l'autre électrode de la paire d'électrodes 10a, 10b est une électrode en cuivre. Selon cet exemple de réalisation particulier, l'eau de mer est réduite pour produire de l'hydrogène. La réaction d'oxydo-réduction qui se produit entre les électrodes 10a, 10b et l'eau de mer génère un courant ionique dans le volume d'eau pénétré dans la cavité 8 de la lunette 4, ainsi qu'un transport de charges électriques correspondant au courant nécessaire pour l'alimentation du dispositif de source de lumière 12. La pile ainsi formée selon ce premier exemple de réalisation particulier présente typiquement une tension à circuit ouvert de l'ordre de 0,5 V.

Selon un deuxième exemple de réalisation particulier, les électrodes 10a, 10b de la paire d'électrodes sont choisies de manière à ce que la paire d'électrodes 10a, 10b et l'eau de mer forment une pile électrochimique de type Leclanché. Selon cet exemple de réalisation particulier, l'eau de mer joue seulement le rôle d'électrolyte. La cathode 10a de la paire d'électrodes comprend par exemple un oxyde de manganèse déposé sur une feuille métallique. La pile ainsi formée selon ce deuxième exemple de réalisation particulier présente typiquement une tension à circuit ouvert de l'ordre de 1,5 V ; et produit un courant par exemple de l'ordre de 10 mA/g d'oxyde de manganèse.

Selon un troisième exemple de réalisation particulier, les électrodes 10a, 10b de la paire d'électrodes sont choisies de manière à ce que la paire d'électrodes 10a, 10b et l'eau de mer forment une pile électrochimique de type métal/air. Selon cet exemple de réalisation particulier, l'oxygène dissout dans l'eau de mer est réduit. L'anode 10b de la paire d'électrodes est par exemple constituée d'un matériau métallique. Le matériau métallique est de préférence de l'aluminium. En variante, le matériau métallique peut également être du zinc, ou encore du magnésium. La pile ainsi formée selon ce troisième exemple de réalisation particulier présente typiquement une tension à circuit ouvert de l'ordre de 1,5 V. Dans ce troisième exemple de réalisation particulier, il est nécessaire d'assurer une bonne convection de l'eau de mer au sein de la montre pour renouveler l'oxygène consommé, ce qui peut être fait en optimisant le nombre et la forme des ouvertures en contact avec l'extérieur de la lunette.

La description précédente de la montre selon l'invention a été faite en référence à un élément muni d'un seul index et définissant une seule cavité intérieure ; et en référence à un seul dispositif de source de lumière. Toutefois, l'homme du métier comprendra que l'invention s'applique de la même manière à des montres comprenant une pluralité d'index, de cavités intérieures, de paires d'électrodes et de dispositifs de source de lumière associés chacun respectivement à un index.

On notera en outre que le dispositif de source de lumière selon l'invention est énergétiquement autonome de sorte qu'il peut équiper aussi bien une montre comportant un mouvement mécanique qu'une montre comportant un mouvement électronique ou hybride.

Enfin, l'utilisation d'une LED comme source de lumière préférée pour signaler l'index de plongée permet avantageusement de choisir la couleur de celle-ci, car la gamme de couleurs des LEDs couvre une large palette contrairement aux matières phosphorescentes qui sont toujours orange, vert ou bleu clair. Une personne qui plonge habituellement dans une eau bleue aura intérêt à choisir une LED de couleur jaune afin d'avoir un maximum de contraste. De même, une personne qui plonge habituellement dans une eau verdâtre pourra choisir avantageusement une LED de couleur rouge.

## Revendications

1. Montre (1) comprenant une boîte de montre (2) munie d'une carrure, la carrure portant un élément (4) muni d'au moins un index (6) et définissant une cavité intérieure (8) ;
dans laquelle la montre (1) comprend en outre au moins une paire d'électrodes (10a, 10b) et au moins un dispositif de source de lumière (12) relié à la paire d'électrodes (10a, 10b) et agencé en regard de l'index (6), les électrodes (10a, 10b) de la paire d'électrodes étant fixées dans la cavité intérieure (8), l'élément (4) étant perméable à l'eau de sorte que, lorsque la montre (1) est immergée dans l'eau de mer (15), de l'eau de mer (15) puisse pénétrer dans la cavité intérieure (8), de manière à ce que la paire d'électrodes (10a, 10b) et l'eau de mer (15) forment une pile électrochimique, pour alimenter ledit dispositif de source de lumière (12) et dans laquelle l'élément (4) est une lunette annulaire montée à rotation autour de la carrure, la lunette (4) définissant une cavité intérieure (8) débouchant à l'extérieur de la boîte de montre (2).

2. Montre (1) selon la revendication 1, **caractérisée en ce que** les deux électrodes (10a, 10b) de la paire d'électrodes présentent chacune une géométrie plane et s'étendent parallèlement l'une à l'autre, en vis-à-vis dans la cavité intérieure (8) de la lunette (4).

3. Montre (1) selon la revendication 1, **caractérisée en ce que** les deux électrodes (10a, 10b) de la paire d'électrodes présentent chacune une géométrie cylindrique et sont agencées de manière concentrique dans la cavité intérieure (8) de la lunette (4), une première électrode (10a) formée d'une feuille métallique entourant une deuxième électrode (10b).

4. Montre (1) selon l'une quelconque des revendications précédentes, **caractérisée en ce qu'**elle comporte en outre un élément mécanique (14) de séparation et/ou d'isolation électrique des deux électrodes (10a, 10b) de la paire d'électrodes.

5. Montre (1) selon la revendication 4 lorsqu'elle dépend de la revendication 3, **caractérisée en ce que** l'élément mécanique de séparation (14) est formé d'une membrane en tissu ou en polymère.

6. Montre (1) selon la revendication 5 lorsqu'elle dépend de la revendication 4, **caractérisée en ce que** l'élément mécanique de séparation (14) est formé d'une membrane perméable aux ions.

7. Montre (1) selon l'une quelconque des revendications précédentes, **caractérisée en ce qu'**elle comprend plusieurs paires d'électrodes (10a, 10b) de polarités opposées, les paires d'électrodes (10a, 10b) étant reliées entre elles en série.

8. Montre (1) selon l'une quelconque des revendications précédentes, **caractérisée en ce que** le dispositif de source de lumière (12) comporte au moins une diode électroluminescente (16).

9. Montre (1) selon la revendication 8, **caractérisée en ce que** la diode électroluminescente (16) est enrobée dans une résine de protection apte à isoler électriquement la diode électroluminescente (16) de l'eau.

10. Montre (1) selon la revendication 8 ou 9, **caractérisée en ce que** la diode électroluminescente (16) est agencée dans la cavité intérieure (8) de l'élément (4), sous l'index (6).

11. Montre (1) selon l'une quelconque des revendications précédentes, **caractérisée en ce que** l'index (6) est formé d'une ouverture ménagée dans l'élément (4), ladite ouverture étant munie d'une fenêtre apte à laisser passer la lumière.

12. Montre (1) selon la revendication 11, **caractérisée en ce que** la fenêtre est réalisée en saphir.

13. Montre (1) selon la revendication 12, **caractérisée en ce qu'**au moins une des surfaces libres du saphir est dépolie.

14. Montre (1) selon l'une quelconque des revendications précédentes, **caractérisée en ce qu'**une première électrode de la paire d'électrodes est une électrode en zinc, et une deuxième électrode de la paire d'électrodes est une électrode en cuivre.

15. Montre (1) selon l'une quelconque des revendications 1 à 13, **caractérisée en ce que** les électrodes (10a, 10b) de la paire d'électrodes sont choisies de manière à ce que la paire d'électrodes (10a, 10b) et l'eau de mer (15) forment une pile électrochimique de type Leclanché.

16. Montre (1) selon la revendication 15, **caractérisée en ce qu'**une cathode (10a) de la paire d'électrodes comprend un oxyde de manganèse déposé sur une feuille métallique.

17. Montre (1) selon l'une quelconque des revendications 1 à 13, **caractérisée en ce que** les électrodes (10a, 10b) de la paire d'électrodes sont choisies de manière à ce que la paire d'électrodes (10a, 10b) et l'eau de mer (15) forment une pile électrochimique de type métal/air.

18. Montre (1) selon la revendication 17, **caractérisée en ce qu'**une anode (10b) de la paire d'électrodes est constituée d'un matériau métallique choisi parmi le groupe consistant en de l'aluminium, du zinc et du magnésium.

19. Montre (1) selon l'une quelconque des revendications précédentes, **caractérisée en ce que** la lunette (4) est une lunette tournante.

20. Montre (1) selon l'une quelconque des revendications précédentes, **caractérisée en ce qu'**elle comprend une pluralité d'index, de cavités intérieures, de paires d'électrodes et de dispositifs de source de lumière associés chacun respectivement à un index.

21. Montre (1) selon l'une quelconque des revendications précédentes, **caractérisée en ce qu'**une paroi intérieure de la cavité intérieure (8) est revêtue d'une couche d'un sel soluble dans l'eau.

22. Montre (1) selon l'une quelconque des revendications précédentes, **caractérisée en ce que** la montre (1) comprend en outre un actionneur externe et un dispositif de source de lumière additionnel agencé dans la boîte de montre en regard d'un cadran de la montre, l'actionneur externe et le dispositif de source de lumière additionnel étant reliés électriquement à la paire d'électrodes.

## Patentansprüche

1. Tragbare Uhr (1) mit einem Uhrengehäuse (2), das mit einem Gehäusemittelteil versehen ist, wobei der Gehäusemittelteil ein Element (4) trägt, das mit mindestens einer Markierung (6) versehen ist und einen inneren Hohlraum (8) definiert;
wobei die tragbare Uhr (1) weiterhin mindestens ein Elektrodenpaar (10a, 10b) und mindestens eine Lichtquellenvorrichtung (12) umfasst, die mit dem Elektrodenpaar (10a, 10b) verbunden ist und gegenüberstehend der Markierung (6) angeordnet ist, wobei die Elektroden (10a, 10b) des Elektrodenpaars in dem inneren Hohlraum (8) fixiert sind, wobei das Element (4) wasserdurchlässig ist, so dass dann, wenn die tragbare Uhr (1) in Meerwasser (15) getaucht ist, das Meerwasser (15) in den inneren Hohlraum (8) eindringen kann, derart, dass das Elektrodenpaar (10a, 10b) und das Meerwasser (15) eine elektrochemische Zelle zur Stromversorgung der Lichtquellenvorrichtung (12) bilden,
**dadurch gekennzeichnet, dass**
das Element (4) eine ringförmige Lünette ist, die drehbar um den Gehäusemittelteil montiert ist, wobei die Lünette (4) einen inneren Hohlraum (8) definiert, der zur Außenseite des Uhrengehäuses (2) führt.

2. Tragbare Uhr (1) nach Anspruch 1, **dadurch gekennzeichnet, dass** die beiden Elektroden (10a, 10b) des Elektrodenpaars jeweils eine planare Geometrie aufweisen und sich in dem inneren Hohlraum (8) der Lünette (4) parallel zueinander und einander gegenüberliegend erstrecken.

3. Tragbare Uhr (1) nach Anspruch 1, **dadurch gekennzeichnet, dass** die beiden Elektroden (10a, 10b) des Elektrodenpaars jeweils eine zylindrische Geometrie aufweisen und in dem inneren Hohlraum (8) der Lünette (4) konzentrisch angeordnet sind, wobei eine aus einer Metallfolie gebildete erste Elektrode (10a) eine zweite Elektrode (10b) umgibt.

4. Tragbare Uhr (1) nach einem der vorhergehenden Ansprüche, **dadurch gekennzeichnet, dass** sie weiterhin ein mechanisches Element (14) zum Trennen und/oder elektrischen Isolieren der beiden Elektroden (10a, 10b) des Elektrodenpaars umfasst.

5. Tragbare Uhr (1) nach Anspruch 4, wenn abhängig von Anspruch 3, **dadurch gekennzeichnet, dass** das mechanische Trennelement (14) aus einer Gewebe- oder Polymermembran gebildet ist.

6. Tragbare Uhr (1) nach Anspruch 5, wenn abhängig von Anspruch 4, **dadurch gekennzeichnet, dass** das mechanische Trennelement (14) aus einer ionendurchlässigen Membran gebildet ist.

7. Tragbare Uhr (1) nach einem der vorhergehenden Ansprüche, **dadurch gekennzeichnet, dass** sie mehrere Elektrodenpaare (10a, 10b) mit entgegengesetzten Polaritäten umfasst, wobei die Elektrodenpaare (10a, 10b) miteinander in Reihe geschaltet sind.

8. Tragbare Uhr (1) nach einem der vorhergehenden Ansprüche, **dadurch gekennzeichnet, dass** die Lichtquellenvorrichtung (12) mindestens eine Leuchtdiode (16) umfasst.

9. Tragbare Uhr (1) nach Anspruch 8, **dadurch gekennzeichnet, dass** die Leuchtdiode (16) mit einer Harzschutzhülle umgeben ist, die geeignet ist, die Leuchtdiode (16) gegenüber Wasser elektrisch zu isolieren.

10. Tragbare Uhr (1) nach Anspruch 8 oder 9, **dadurch gekennzeichnet, dass** die Leuchtdiode (16) in dem inneren Hohlraum (8) des Elements (4) unter der Markierung (6) angeordnet ist.

11. Tragbare Uhr (1) nach einem der vorhergehenden Ansprüche, **dadurch gekennzeichnet, dass** die Markierung (6) mit einer in dem Element (4) ausgesparten Öffnung gebildet ist, wobei die Öffnung mit einem Fenster versehen ist, das geeignet ist, Licht durchzulassen.

12. Tragbare Uhr (1) nach Anspruch 11, **dadurch gekennzeichnet, dass** das Fenster aus Saphir hergestellt ist.

13. Tragbare Uhr (1) nach Anspruch 12, **dadurch gekennzeichnet, dass** mindestens eine der freien Oberflächen des Saphirs mattiert ist.

14. Tragbare Uhr (1) nach einem der vorhergehenden Ansprüche, **dadurch gekennzeichnet, dass** eine erste Elektrode des Elektrodenpaars eine Zinkelektrode ist und eine zweite Elektrode des Elektrodenpaars eine Kupferelektrode ist.

15. Tragbare Uhr (1) nach einem der Ansprüche 1 bis 13, **dadurch gekennzeichnet, dass** die Elektroden (10a, 10b) des Elektrodenpaars derart gewählt sind, dass das Elektrodenpaar (10a, 10b) und das Meerwasser (15) eine elektrochemische Zelle des Leclanché-Typs bilden.

16. Tragbare Uhr (1) nach Anspruch 15, **dadurch gekennzeichnet, dass** eine Kathode (10a) des Elektrodenpaars Manganoxid enthält, das auf einer Metallfolie abgelagert ist.

17. Tragbare Uhr (1) nach einem der Ansprüche 1 bis 13, **dadurch gekennzeichnet, dass** die Elektroden (10a, 10b) des Elektrodenpaars derart gewählt sind, dass das Elektrodenpaar (10a, 10b) und das Meerwasser (15) eine elektrochemische Zelle des Metall/Luft-Typs bilden.

18. Tragbare Uhr (1) nach Anspruch 17, **dadurch gekennzeichnet, dass** eine Anode (10b) des Elektrodenpaars aus einem Metallmaterial gebildet ist, das aus der Gruppe ausgewählt ist, die aus Aluminium, Zink und Magnesium besteht.

19. Tragbare Uhr (1) nach einem der vorhergehenden Ansprüche, **dadurch gekennzeichnet, dass** die Lünette (4) eine drehbare Lünette ist.

20. Tragbare Uhr (1) nach einem der vorhergehenden Ansprüche, **dadurch gekennzeichnet, dass** sie mehrere Markierungen sowie mehrere innere Hohlräume, Elektrodenpaare und Lichtquellenvorrichtungen umfasst, die jeweils einer Markierung zugeordnet sind.

21. Tragbare Uhr (1) nach einem der vorhergehenden Ansprüche, **dadurch gekennzeichnet, dass** eine Innenwand des inneren Hohlraums (8) mit einer Schicht eines wasserlöslichen Salzes beschichtet ist.

22. Tragbare Uhr (1) nach einem der vorhergehenden Ansprüche, **dadurch gekennzeichnet, dass** die tragbare Uhr (1) ferner einen externen Aktuator und eine zusätzliche Lichtquellenvorrichtung umfasst, die in dem Uhrengehäuse gegenüber einem Zifferblatt der tragbaren Uhr angeordnet ist, wobei der externe Aktuator und die zusätzliche Lichtquellenvorrichtung mit dem Elektrodenpaar elektrisch verbunden sind.

## Claims

1. Watch (1) comprising a watch case (2) provided with a case middle, the case middle carrying an element (4) provided with at least one index (6) and defining an inner cavity (8) ;
the watch (1) including at least one pair of electrodes (10a, 10b) and at least one light source device (12) connected to the electrode pair (10a, 10b) and arranged opposite the index (6), the electrodes (10a, 10b) of the electrode pair being fixed inside the inner cavity (8), the element (4) being water permeable such that, when the watch (1) is immersed in seawater (15), the seawater (15) can penetrate the inner cavity (8) so that the electrode pair (10a, 10b) and the seawater (15) form an electrochemical cell, for powering said light source device (12), **characterized in that** the element (4) is an annular bezel mounted to rotate around the case middle, the bezel (4) defining an inner cavity (8) leading to the exterior of the watch case (2).

2. Watch (1) according to claim 1, **characterized in that** the two electrodes (10a, 10b) of the electrode pair each have a flat geometry and extend parallel and opposite to each other inside the inner cavity (8) of the bezel (4).

3. Watch (1) according to claim 1, **characterized in that** the two electrodes (10a, 10b) of the electrode pair each have a flat geometry and are arranged concentrically inside the inner cavity (8) of the bezel (4), a first electrode (10a) formed of foil surrounding a second electrode (10b).

4. Watch (1) according to any of the preceding claims, **characterized in that** the watch further includes a mechanical element (14) for separating and/or electrically isolating the two electrodes (10a, 10b) of the electrode pair,

5. Watch (1) according to claim 4 when dependent on claim 3, **characterized in that** the mechanical separation element (14) is formed of a fabric or polymer membrane.

6. Watch (1) according to claim 5 when dependent on claim 4, **characterized in that** the mechanical separation element (14) is formed of an ion permeable membrane.

7. Watch (1) according to any of the preceding claims, **characterized in that** the watch includes several pairs of electrodes (10a, 10b) of opposite polarity, the electrode pairs (10a, 10b) being series connected to each other.

8. Watch (1) according to any of the preceding claims, **characterized in that** the light source device (12) includes at least one light emitting diode (16).

9. Watch (1) according to claim 8, **characterized in that** the light emitting diode (16) is coated with a protective resin able to electrically isolate the light emitting diode (16) from water.

10. Watch (1) according to claim 8 or 9, **characterized in that** the light emitting diode (16) is arranged inside the inner cavity (8) of the element (4), underneath the index (6).

11. Watch (1) according to any of the preceding claims, **characterized in that** the index (6) is formed of an aperture arranged in the element (4), said aperture being provided with a window able to let in light.

12. Watch (1) according to claim 11, **characterized in that** the window is made from a sapphire glass.

13. Watch (1) according to claim 12, **characterized in that** at least one of the free surfaces of the sapphire glass is frosted.

14. Watch (1) according to any of the preceding claims, **characterized in that** a first electrode of the electrode pair is a zinc electrode and a second electrode of the electrode pair is a copper electrode.

15. Watch (1) according to any of claims 1 to 13, **characterized in that** the electrodes (10a, 10b) of the electrode pair are chosen such that the electrode pair (10a, 10b) and the seawater (15) form a Leclanché type electrochemical cell.

16. Watch (1) according to claim 15, **characterized in that** a cathode (10a) of the electrode pair includes a manganese oxide deposited on a foil.

17. Watch (1) according to any of claims 1 to 13, **characterized in that** the electrodes (10a, 10b) of the electrode pair are chosen such that the electrode pair (10a, 10b) and the seawater (15) form a metal-air type electrochemical cell.

18. Watch (1) according to claim 17, **characterized in that** an anode (10b) of the electrode pair is formed of a metal material chosen from the group consisting of aluminium, zinc and magnesium.

19. Watch (1) according to any of the preceding claims, **characterized in that** the bezel (4) is a rotating bezel.

20. Watch (1) according to any of the preceding claims, **characterized in that** the watch comprises a plurality of indices, of inner cavities, of electrode pairs and of light source devices each respectively associated with an index.

21. Watch (1) according to any of the preceding claims, **characterized in that** an inner wall of the inner cavity (8) is coated with a water soluble salt layer.

22. Watch (1) according to any of the preceding claims, **characterized in that** the watch (1) also includes an external actuator and an additional light source arranged inside the watch case facing a dial of the watch, the external actuator and the additional light source being electrically connected to the electrode pair.
